# EUROPÄISCHE PATENTSCHRIFT

(11) **EP 0 603 812 B1**
(45) Veröffentlichungstag und Bekanntmachung des Hinweises auf die Patenterteilung: **03.04.1996**
(21) Anmeldenummer: 93120574.4
(22) Anmeldetag: 21.12.1993
(51) Int. Cl.: B29D 31/00, B29B 11/16, B29C 70/14

(54) **Verripptes Flächenelement aus faserverstärktem Kunststoff sowie Verfahren zu seiner Herstellung**
Ribbed fibre reinforced plastic panel and method for its manufacture
Panneau nervuré en matière plastique renforcé de fibres et procédé pour sa fabrication

(30) Priorität: 24.12.1992 DE 4244192
(43) Veröffentlichungstag der Anmeldung: 29.06.1994
(73) Patentinhaber: F.S. Fehrer Gummihaar- und Schaumpolsterfabrik GmbH & Co. KG, D-97318 Kitzingen/Main (DE)
(72) Erfinder: Mehling, Walter, Dipl.-Ing., D-97209 Veitshöchheim (DE); Ehnert, Wolfgang, Dipl.-Ing. (FH), D-97705 Burkardroth-Stralsbach (DE)
(74) Vertreter: Pöhner, Wilfried Anton, Dr.

(56) Entgegenhaltungen:
- EP-A- 0 314 353
- DE-A- 1 704 670
- US-A- 4 137 354

## Beschreibung

Die Erfindung betrifft ein verripptes Flächenelement, bestehend aus einer Platte und darauf angeordneten Rippen, die sich in Knotenpunkten schneiden und sowohl Platte als auch die faserverstärkten Rippen aus Kunststoff bestehen und ein Verfahren zu seiner Herstellung.

Aus der DE-A-17 04 670 ist ein gattungsgemäßes Flächenelement gemäß dem Oberbegriff des Anspruchs 1 bekannt, bei dem zur Erzeugung einer hohen Belastbarkeit und Steifigkeit eine aus Kunststoff bestehende und die Grundfläche bildende Platte mit Glasfasern verstärkt und zusätzlich, wenigstens auf der einen Seite mit Rippen versehen, die in unterschiedlichen Richtungen verlaufen und sich in Knotenpunkten schneiden, wobei die Rippen auch ihrerseits durch Glasfasern verstärkt sind.

Die Hauptschwierigkeit der Herstellung besteht in der Einbringung der Fasern in jene Teile der Form, die nach dem Ausspritzen mit Kunststoff die Rippen ergeben. Üblich ist, in Richtung der Rippen die Faserstränge einzulegen, wobei allerdings in den Knotenpunkten besondere Vorkehrungen zu treffen sind, indem jeweils in Richtung der Schnittgeraden eine Durchtrennung zumindest eines Stranges vorzunehmen ist und die entsprechenden Zuschnitte dann in den späteren Knotenpunkte sich kreuzend in die Form einzulegen sind. Keiner näheren Erläuterung bedarf die Zeitaufwendigkeit dieser Vorgehensweise. Zudem bewirken die Schnitte in die Faserstränge eine nachteilige Reduzierung der Festigkeit des Endproduktes.

Hiervon ausgehend hat sich die Erfindung die Schaffung eines verrippten Flächenelementes zur Aufgabe gemacht, das ein Höchstmaß an Stabilität und Steifigkeit aufweist.

Ausgehend von dem Stande der Technik wird die Aufgabe erfindungsgemäß dadurch gelöst, daß die in den Rippen befindlichen Fasern eine zusammenhängende Fasermatte bilden, die aus durch Aussparungen begrenzten Fasersträngen aufgebaut ist, deren räumliche Anordnung denen der Rippen entspricht. Das erfindungsgemäße Flachenelement wird im Anspruch 1 beschrieben. Die erfindungsgemäße Herstellung solch eines Flachenelementes wird im Anspruch 8 beschrieben.

Der Kerngedanke der Erfindung besteht darin, daß eine Matte vor dem Einspritzen des Kunststoffes in die Form eingelegt wird, die aus einem ursprünglich flächigen Gebilde durch Bearbeitung in einem Vorformwerkzeug eine derartige Form und Gestalt erfahren hat, daß die Faserstränge aus dem ursprünglich homogenen und flächigen Gebilde im wesentlichen relativ gegeneinander verschoben worden sind, wobei deren räumliche Anordnung exakt der später zu erzeugenden Rippen entspricht. Das auch noch am fertigen Werkstück feststellbare Ergebnis ist die Orientierung der Fasern in Längsrichtung der Rippen, wobei sie in den Knotenpunkten - ohne zertrennt zu sein - durchlaufend angeordnet sind.

Zur Verwendung eignen sich alle Arten von Fasermatten, insbesondere auch Langfasermatten und Endlosmatten, die eine räumliche Verschiebung der Fasern im Vorformwerkzeug zulassen. Dies gilt grundsätzlich für vernadelte Matten aber auch jene, bei denen die in der Matte bereits vorhandene Fixierung der Fasern gegeneinander - beispielsweise bei einem thermoplastischen Binder - durch Erwärmen vorübergehend aufgehoben werden kann. Denkbar ist als Alternative die Applikation von Lösungsmittel. Mit Beendigung der Verformung durch Verschieben der Fasern kann wieder eine bleibende Fixierung zueinander eintreten.

Der entscheidende Vorteil besteht darin, daß alle Fasern ohne Unterbrechung in den Knoten in Richtung der Rippen verlaufen und damit ein Maximum an Belastbarkeit zu erreichen gestatten.

Als Material für die Fasern bieten sich Glasfasern bei glasfaserverstärktem Kunststoff (GFK) oder Kohlefasern (CFK), jedoch insbesondere Aramid- und hochfeste Kunststoffasern an.

Als Kunststoffmaterial kommen Polyurethan, Polyester oder Epoxidharz in Betracht.

Im Rahmen der Verformung der als Ausgangsmaterial genutzten Matten ist festzustellen, daß die Fasern häufig in einer ringförmigen Anordnung und Orientierung verlaufen und nicht in gewünschter Weise geradlinig in Richtung der Rippen in den Knotenpunkten orientiert sind. In zweckmäßiger Ausbildung ist deshalb vorgesehen, in den maximalen Belastungen unterliegenden Knoten eine zusätzliche Verstärkung anzubringen. Hierzu können entsprechend dem Schnittwinkel der Rippen geformte kreuzförmige Elemente eingesetzt werden oder aber durch Querschnittserweiterung der Rippen eine stabilisierend wirkende Verdickung des Knotenpunktes erreicht werden.

In einer Variante kann in Richtung der Rippen und in den Knotenpunkten eine Verstärkung durch Einfüllen von Schnitzeln, Granulat - beispielsweise durch Einrütteln mit Hilfe einer V-Form - vorgenommen werden.

Zur weiteren Verstärkung können zusätzlich in diese Matte in Richtung der Rippen sogenannte Rovings, also Stränge aus einem Gespinst von Glasfasern eingelegt, so daß eine Art Gewebe senkrecht zur Grundfläche entsteht. Die Einbringung kann über im Randbereich angebrachte und als Nägel verwirklichte Umlenkpunkte erfolgen, die ein systematisches Einlegen der Rovings gestattet.

Im folgenden wird die Herstellung eines derartigen, aus einer Platte und darauf räumlich abgehoben angeordneten Rippen mit Knotenpunkten bestehenden Flächenelementes näher erläutert.
Ausgangspunkt ist eine Fasermatte mit relativ gegeneinander verschiebbaren Fasern, wobei die Verschiebung vorübergehend durch Einwirkung von außen in Form von Erwärmung und Applikation von Lösungsmittel erzeugt werden kann. Andererseits besteht die Möglichkeit der Verwendung vernadelter Matten, bei denen die Fasern bereits von Hause aus verschiebbar sind und nicht gegeneinander durch entsprechende Materialien fixiert sind. Die aus Kurz- oder Langglas- oder Kohlefaser bestehende Matte wird auf ein Vorformwerkzeug aufgelegt und in eine Matrize eingepreßt, die in Bewegungsrichtung der damit zusammenarbeitenden Patrize als spitzer dreidimensionaler Körper geformt ist, zwischen denen Nuten verlaufen, die in einer solchen räumlichen Anordnung, Form und mit derart angeordneten Knotenpunkten erfolgt, wie sie der Anordnung der Rippen im herzustellenden Teil entsprechen. Die Patrize weist in Bewegungsrichtung verlaufende Stege auf, die exakt den Nuten in der Matrize entsprechen, so daß nach dem Einbringen der zunächst homogenen und flächigen Matte zwischen die beiden Werkzeuge und nach der Abwärtsbewegung der Patrize die gesamte Matte nahezu vollständig in die Nuten eingepreßt wird. Die vornehmlich als Pyramiden ausgebildeten, spitzen dreidimensionalen Körper, die durch Begrenzung der sich kreuzenden Rippen in ihrer Grundfläche bestimmt sind, bewirken während der Abwärtsbewegung eine Teilung der Matte und ein Ansammeln der Fasern in den Nuten, die später die Rippen ergeben.

Die Herausnahme der nunmehr strukturierten Matte geschieht in der Regel über ein Entformwerkzeug und kann erst dann erfolgen, wenn bei Anwendung eines die räumliche Verschiebung der Fasern zulassenden Mediums (Wärme, Lösungsmittel) eine erneute Fixierung der Fasern gegeneinander eingetreten ist.

Anschließend wird in das konventionelle und der Herstellung des verrippten Teiles dienende Werkzeug die die Grundfläche verstärkende homogene und flächige Matte eingelegt und der Kunststoff in bekannter Weise eingespritzt.

Die geschilderte Vorgehensweise erlaubt durch entsprechende Gestaltgebung der das Vorformwerkzeug bildenden Patrize und Matrize jeden gewünschten Faserverlauf und Struktur zu erzielen. Sie kann zudem vor Einlegung in das Kunststoffwerkzeug einer nochmaligen Prüfung unterzogen werden. Die Fasern lassen sich somit definiert in ihrem Verlauf innerhalb des Kunststoffteiles beeinflussen und einstellen. Man erhält eine hohe Verdichtung von Fasern im Bereich der Rippen. Vergleicht man das erfindungsgemäße Herstellungsverfahren mit der konventionellen Vorgehensweise, bei dem sich aufgrund der geringeren Beweglichkeit der Fasern im Bereich der Rippen in unerwünschter Weise gerade dort der dann wenig verstärkte Kunststoff überwiegt und gerade das Entstehen einer geringen Stabilität begünstigt wird, ergeben sich erhebliche Vorteile.

Je größer die Grundfläche der einzelnen, die Teilung der Matte bewirkenden spitzen, dreidimensionalen Körper ist, um so größer ist die Anzahl der Fasern, die in die einzelnen Nuten gepreßt werden. Bei einer kleineren Grundfläche hingegen wächst die Anzahl der Nuten, so daß die Faserdichte pro Nut demzufolge abnehmen muß.

In einer zweckmäßigen Ausgestaltung ist die Grundfläche der einzelnen spitzen Körper unterschiedlich gewählt. Das Ergebnis ist, daß in jedem Bereich der Matte und demzufolge in den einzelnen Rippen gezielt eine unterschiedliche Faserndichte erzeugbar wird. Gerade jene Bereiche, die hohen Belastungen unterliegen, kann durch Rippen mit hoher Glasfaserverstärkung gezielt Unterstützung gewährt werden.

Weitere Einzelheiten, Merkmale und Vorteile der Erfindung lassen sich dem nachfolgenden Beschreibungsteil entnehmen, in dem anhand der Zeichnung ein Ausführungsbeispiel der Erfindung sowie nähere Details erläutert sind. Es zeigen:
- Figur 1: einen Ausschnitt aus einer Matte vor Einbringung in das Werkzeug,
- Figur 2: das zur Herstellung der Matte gemäß Figur 1 verwendete Vorformwerkzeug

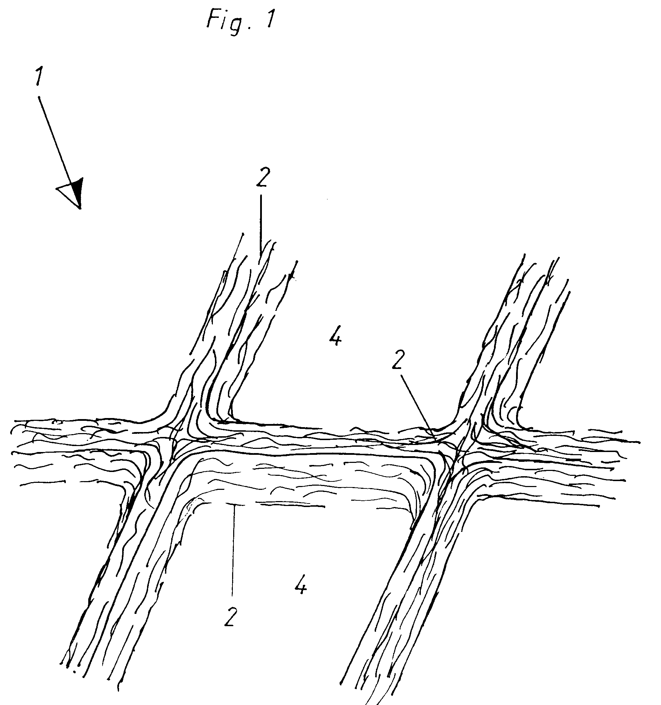

In der Figur 1 ist in schematischer Darstellung ein Ausschnitt der Matte (1) wiedergegeben, wie sie dem Vorformwerkzeug entnommen und in das eigentliche Werkzeug zur Herstellung des verrippten Flächenelementes eingelegt wird. In seinem grundsätzlichen Aufbau besteht es aus einer Vielzahl von Fasern (2) gebildeten Fasersträngen (3) die Aussparungen (4) umgrenzen. Die räumliche Anordnung der einzelnen Faserstränge (3) erfolgt entsprechend dem Verlauf der Rippen in dem anschließend noch herzustellenden Flächenelement, mit dem Ergebnis, daß die Faserstränge (3) in das Innere der Rippen des Flächenelementes zu liegen kommen und dementsprechend zur Erhöhung der Festigkeit und Steifigkeit beitragen.

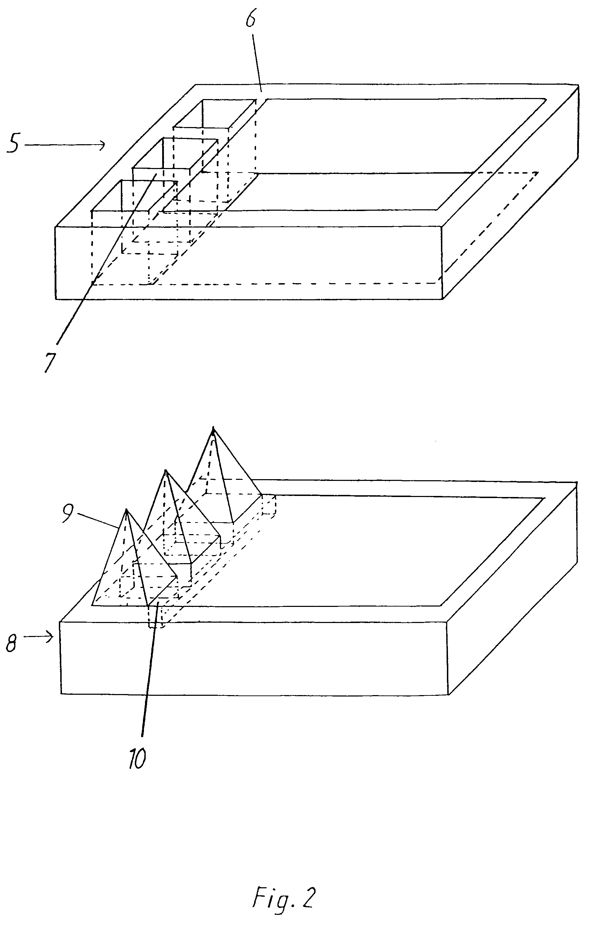

In Figur 2 ist in schematisch gehaltener Darstellung das Vorformwerkzeug wiedergegeben, mit dessen Hilfe die in Figur 1 gezeigte Matte (1) aus einer zunächst weitgehend homogenen Matte als Ausgangsmaterial herstellbar wird.

Das in der Darstellung oben gezeigte Element ist die Patrize (5), die aus einer Vielzahl von in einem Rahmen (6) angeordneten Stegen (7) besteht, deren räumliche Anordnung ist entsprechend der der darunter befindlichen Matrize (8) gewählt. Sie weist an ihrer, der Patrize (5) zugewandten Oberseite eine Vielzahl von nebeneinander angeordneten Pyramiden (9) auf, zwischen denen jeweils Nuten (10) verlaufen. Die Grundflächen der einzelnen Pyramiden (9) können hierbei zur Beeinflussung der Faserdichte in den herzustellenden Fasersträngen (3) der Matte (1) unterschiedlich gewählt sein. Die Pyramiden (9) bewirken nach Einbringen einer weitgehend homogenen Matte, daß bei Bearbeitung eine räumliche Verschiebung des ursprünglich homogenen Fasergemisches durch Einwirkung der Pyramiden (9) in Aussparungen (4) und durch Ansammlung der Fasern in den Nuten (10) in Faserstränge (3) unterteilt und entsprechend verformt wird. Die Stege (7) der Patrize (5) bewirken ein Einziehen der Matte in die Nuten (10), da sie in ihren räumlichen Anordnungen jeweils korrespondieren. Im Ergebnis erhält man die in Figur 1 gezeigte Matte (1), die ihrerseits in jenes, das verrippte Flächenelement auf an sich bekannte Weise herstellende Werkzeug eingelegt.

Im Ergebnis wird der Aufbau eines verrippten Flächenelementes vorgeschlagen, das sich durch hohe Festigkeit, Stabilität und Steifigkeit durch optimale Anordnung und Verlauf der Fasern im Inneren des Kunststoffteiles auszeichnet. Gleichzeitig wird eine sich durch besonders rasche und einfache Verfahrensweise auszeichnende Herstellung vorgeschlagen.

## Patentansprüche

1. Verripptes Flächenelement, bestehend aus einer Platte und darauf angeordneten Rippen, die sich in Knotenpunkten schneiden und sowohl Platte als auch die faserverstärkten Rippen aus Kunststoff bestehen, **dadurch gekennzeichnet**, daß die in den Rippen befindlichen Fasern (2) eine zusammenhängende Fasermatte (1) bilden, die aus durch Aussparungen (4) begrenzten Fasersträngen (3) aufgebaut ist, deren räumliche Anordnung denen der Rippen entspricht.

2. Element nach Anspruch 1, **gekennzeichnet durch** eine vernadelte und/oder Langfaser- und/oder Endlosmatte, bei denen eine zumindest temporäre Verschiebung der Fasern (2) relativ gegeneinander evtl. nach Vorbehandlung möglich ist.

3. Element nach Anspruch 1 oder 2, **gekennzeichnet durch** Glas- und/oder Kohle- und /oder Aramid- und oder hochfeste Kunststoffasern.

4. Element nach einem der Ansprüche 1 bis 3, **gekennzeichnet durch** das Kunststoffmaterial Polyurethan und/oder Polyester und/oder Epoxidharz.

5. Element nach einem der Ansprüche 1 bis 4, **dadurch gekennzeichnet,** daß in den Knoten eine zusätzliche Verstärkung eingelegt ist.

6. Element nach einem der Ansprüche 1 bis 5, **dadurch gekennzeichnet,** daß in den Knotenpunkt und/oder entlang der Rippen Schnitzel, Granulat odgl. eingebracht ist.

7. Element nach einem der Ansprüche 1 bis 6, **dadurch gekennzeichnet,** daß in Richtung der Rippen Rovings eingelegt sind.

8. Herstellung eines verrippten Flächenelements nach einem der Ansprüche 1 bis 7, wobei eine Fasermatte (1) aus zumindest temporär relativ gegeneinander verschiebbaren Fasern (2) in ein Vorformwerkzeug eingelegt und bearbeitet wird, das aus einer Patrize (5) und einer mit dieser zusammenarbeitenden Matrize (8) besteht, wobei die Matrize (8) aus einer Anzahl nebeneinander angeordneter Erhebungen jeweils etwa in der Form eines spitzen dreidimensionalen Körpers (9), dessen Grundfläche durch die begrenzenden Rippen bestimmt ist, besteht, zwischen denen Nuten (10) verlaufen, deren flächige Anordnung der der Rippen des späteren Flächenelementes entspricht und in die die Patrize (5) während der Arbeitsphase mit Hilfe von Stegen (7) eingreift, anschließend nach Herausnahme die derart vorgeformte Matte (1) in das eigentliche Werkzeug eingelegt und durch Umspritzen das Flächenelement, bestehend aus einer Platte und darauf angeordneten Rippen, hergestellt wird.

9. Verfahren nach Anspruch 8, **dadurch gekennzeichnet**, daß in jenen Bereichen, in denen eine besonders hohe Faserndichte in den Rippen erwünscht ist, die Grundfläche des spitzen dreidimensionalen Körpers (9) hinreichend groß gewählt wird.

## Claims

1. Ribbed surface element, consisting of a plate and ribs arranged thereupon, which intersect in nodal points, and both the plate as well as the fibre reinforced ribs consist of plastic, **wherein** the fibres (2) in the ribs form a coherent fibre mat (1), which is constructed of fibre strands (3), which are delimited by recesses (4), the spatial disposal of said strands corresponding to that of the ribs.

2. Element according to claim 1, **wherein** there is a needle-punched and/or long fibre and/or continuous strand mat which enables at least a temporary displacement of said fibres (2) relatively to one another, possibly after pretreatment.

3. Element according to claim 1 or 2, **wherein** there are glass and/or carbon and/or aramide and/or high tensile strength synthetic fibres.

4. Element according to one of claims 1 to 3, **wherein** the plastic material is polyurethane and/or polyester and/or epoxy resin.

5. Element according to one of claims 1 to 4, **wherein** an additional reinforcement is placed in the nodal points.

6. Element according to one of claims 1 to 5, **wherein** in the nodal points and/or along the ribs, fabric clippings, granulates or similar are placed.

7. Element according to one of claims 1 to 6, **wherein** rovings are inserted in the direction of the ribs.

8. Manufacture of a ribbed surface element according to one of claims 1 to 7, whereby a fibre mat (1) of at least temporarily, relative to one another displaceable fibres (2) is placed in a preforming tool and processed, the tool consisting of a male mould (5) and associated female mould (8), whereby said female mould (8) consists of a number of adjacently disposed rises, more or less in the form of a pointed three-dimensional body (9), whose basal area is defined by the delimiting ribs, between which grooves (10) extend, the areal disposition of which corresponds to that of the ribs of the subsequent surface element and in which the male mould (5) engages during the processing phase with the aid of ridges (7), thereafter after removal the so preformed mat (1) is placed in the actual tool and the surface element, consisting of a plate and ribs disposed thereupon, manufactured through extrusion coating.

9. Method according to claim 8, **wherein** in those regions in which an especially high fibre density is desired in the ribs, the basal area of the pointed three-dimensional body (9) is selected sufficiently large.

## Revendications

1. Panneau nervuré, consistant en une plaque sur laquelle sont disposées des nervures, lesquelles se coupent en des points nodaux, la plaque comme les nervures renforcées par des fibres étant en matière plastique, **caractérisé en ce que** les fibres (2) contenues dans les nervures constituent une natte (1) imbriquée de libres, qui est formée de cordons (3) de fibres qui délimitent des cavités (4) et dont la disposition géométrique correspond à celle des nervures.

2. Panneau selon la revendication 1, **caractérisé par** une natte dense et/ou à fibres longues et/ou sans fin, pour lesquelles un décalage temporaire des fibres (2) les unes par rapport aux autres, le cas échéant après prétraitement, est possible.

3. Panneau selon la revendication 1 ou 2, **caractérisé par** des fibres de verre et/ou de carbone et/ou en Aramide et/ou en matière plastique à haute résistance.

4. Panneau selon l'une des revendications 1 à 3, **caractérisé par** la matière plastique polyuréthane et/ou polyester et/ou résine époxy.

5. Panneau selon l'une des revendications 1 à 4, **caractérisé en ce qu'**un renforcement supplémentaire est disposé aux les points nodaux.

6. Panneau selon l'une des revendications 1 à 5, **caractérisé en ce que** des copeaux, des granulés ou autres sont introduits aux points nodaux et/ou le long des nervures.

7. Panneau selon l'une des revendications 1 à 6, **caractérisé en ce que** du stratifil est déposé dans la direction des nervures.

8. Procédé de fabrication d'un panneau nervuré d'après l'une des revendications 1 à 7, selon lequel une natte (1) en fibres, constituée de fibres (2) pouvant au moins temporairement se déplacer les unes par rapport aux autres, est placée et travaillée dans un outil de préformage qui se compose d'un poinçon (5) et d'une matrice (8) coopérant avec ce dernier, la matrice (8) étant formée d'un ensemble de bossages disposés les uns à côté des autres et ayant chacun sensiblement la forme d'un corps pointu tridimensionnel (9), dont la surface de base est déterminée par la limite des nervures, et entre lesquels s'étendent des rainures (10), dont la disposition géométrique correspond à celles que devront avoir les nervures du futur panneau et à l'intérieur desquelles le poinçon (5) pénètre durant la phase de travail par l'intermédiaire de ses entretoises (7), la natte (1) ainsi préformée étant ensuite retirée et placée dans l'outil proprement dit, où est effectuée l'injection permettant de fabriquer le panneau, qui consiste d'une plaque sur laquelle sont disposées des nervures.

9. Procédé selon la revendication 8, **caractérisé en ce que** dans les zones pour lesquelles on désire avoir dans les nervures une densité en fibres particulièrement élevée, on choisit pour le corps pointu tridimensionnel (9) une surface de base suffisamment grande.
